# EUROPÄISCHE PATENTANMELDUNG

(11) **EP 1 488 702 A1**
(43) Veröffentlichungstag der Anmeldung: **22.12.2004**
(21) Anmeldenummer: 04014460.2
(22) Anmeldetag: 21.06.2004
(51) Int. Cl.: A22C 11/02

(54) **Vorrrichtung und Verfahren zum Fördern und Bearbeiten von pastösen Massen**

(30) Priorität: 20.06.2003 DE 10327672
(71) Anmelder: VEMAG MASCHINENBAU GmbH, 27283 Verden/Aller (DE)
(72) Erfinder: Mathiebe, Dirk, 27283 Verden (DE)
(74) Vertreter: Eisenführ, Speiser & Partner

(57) **Zusammenfassung**

Die Erfindung betrifft eine Vorrichtung zum Fördern und Bearbeiten von pastösen Massen, insbesondere von Wurstmasse. Die Vorrichtung besitzt Fördermittel und eine den Fördermitteln nachgeordnete Schneidvorrichtung sowie einen Drucksensor. Der Drucksensor wirkt mit einer Steuereinrichtung zusammen, um den Druck der geförderten Masse vor der Schneidvorrichtung konstant zu halten. Dazu wird die Geschwindigkeit, mit der die Wurstmasse gefördert und vorangepresst wird, und/oder die Verschlusszeit eines der Schneidvorrichtung nachgeordneten Verschlussmittels durch Einwirken der Steuereinrichtung eingestellt.

## Beschreibung

Die Erfindung betrifft eine Vorrichtung und ein Verfahren zum Fördern und Bearbeiten von pastösen Massen, insbesondere von Wurstmasse. Die Vorrichtung umfasst ein Förderwerk zum Fördern der pastösen Masse, eine dem Förderwerk in Förderrichtung nachgeordnete Schneidvorrichtung und einen Drucksensor zum Messen des Drucks der pastösen Masse.

Bei der Herstellung von Wurst werden zunächst Fleisch, Gewürze und weitere Zutaten mit einem Kutter zerkleinert und zu einer pastösen Wurstmasse vermischt. Diese pastöse Masse wird dann in einer Vorrichtung der beschriebenen Art weiter zerkleinert und gewöhnlich in einen Wurstdarm abgefüllt. Die pastöse Masse wird durch einen Vorrats- und Fülltrichter in die Vorrichtung eingefüllt. In der Vorrichtung wird sie mit Hilfe eines Förderwerks unter Druck gesetzt und zu einer in Förderrichtung nachgeordneten Schneidvorrichtung, gewöhnlich einem Wolf, weiterbefördert. Das Förderwerk ist gewöhnlich eine Förderpumpe, insbesondere eine Flügelzellenpumpe. Diese kann sehr hohe Drücke vor der Schneidvorrichtung aufbauen. Der Druck kann nicht selten bis zu 50 bar erreichen.

Aus der DE 297 16 406 ist bekannt, eine Vorrichtung der eingangs genannten Art mit einem Drucksensor zum Bestimmen des Drucks der Wurstmasse zu versehen. Der Drucksensor ist dabei in einem Druckraum zwischen dem Förderwerk und der Schneidvorrichtung angeordnet. Der Drucksensor soll sicherstellen, dass der Druck der Wurstmasse nicht zu groß wird. Aus dem genannten Dokument geht jedoch nicht hervor, wie die Druckbegrenzung erfolgen soll.

Aufgabe der vorliegenden Erfindung war es daher, ein Verfahren zum Betreiben einer Vorrichtung der beschriebenen Art anzugeben, mit dem eine möglichst gleichbleibende Qualität der bearbeiteten pastösen Masse erzielt und mechanische Belastungen der Vorrichtung verringert werden können. Zudem sollte eine an das Verfahren vorteilhaft angepasste Vorrichtung angegeben werden.

Hinsichtlich des Verfahrensaspekts wird die Aufgabe zum einen gelöst durch ein Verfahren zum Fördern und Bearbeiten von pastöser Masse, umfassend die Schritte:
a) Fördern von pastöser Masse mit Fördermitteln von einem Vorratsraum zu einer Schneidvorrichtung mit einer Ausgangsöffnung und
b) Messen des Drucks der pastösen Masse in Förderrichtung vor der Ausgangsöffnung der Schneidvorrichtung,
   dadurch gekennzeichnet, dass
c) der gemessene Druck der pastösen Masse mit einem vorgewählten Solldruck verglichen und in Abhängigkeit von der Abweichung zwischen dem gemessenen Druck der pastösen Masse und dem Solldruck auf die Fördertätigkeit der Fördermittel und/oder die Schneidetätigkeit der Schneidvorrichtung eingewirkt wird, um den Druck der pastösen Masse auf den Solldruck einzustellen.

Es hat sich nunmehr als überraschend vorteilhaft herausgestellt, den Druck der pastösen Masse vor der Schneidvorrichtung nicht nur in eine Richtung zu begrenzen, nämlich zu hohe Drücke zu verhindern. Besonders gute Verarbeitungsergebnisse und eine gleichbleibende standardisierbare Produktqualität konnten hingegen erreicht werden, wenn der Druck der pastösen Masse im Wesentlichen auf einen konstanten Wert geregelt wurde. Durch die Einstellung des Drucks der pastösen Masse ist es insbesondere möglich, unerwünschte feste Bestandteile der Masse während der Bearbeitung der pastösen Masse abzutrennen und auszusondern. Unerwünschte Bestandteile von Wurstmasse sind beispielsweise Knochenstücke, Sehnen, Knorpel und dergleichen.

Der Druck der pastösen Masse kann zum einen dadurch eingestellt werden, dass die Fördergeschwindigkeit der Fördermittel dem zu erreichenden Druck angepasst wird. Dazu wird die Fördertätigkeit der Fördermittel verlangsamt, wenn der gemessene Druck den Solldruck überschreitet, und beschleunigt, wenn der gemessene Druck den Solldruck unterschreitet. In entsprechender Weise kann der Druck der pastösen Masse auch durch ein Anpassen der Schneidetätigkeit der Schneidvorrichtung eingestellt werden. Dazu wird die Schneidetätigkeit der Schneidvorrichtung derart angepasst, dass der Druck der pastösen Masse an den Solldruck angeglichen wird. Das hier vorgeschlagene Verfahren zum Beeinflussen der Fördertätigkeit der Fördermittel und/oder der Schneidetätigkeit der Schneidvorrichtung ist apparativ einfach umzusetzen und ermöglicht daher ohne großen Kostenaufwand, eine verbesserte Produktqualität zu erzielen. Eine zeit- und personalaufwendige Überwachung der Bearbeitung pastöser Massen und insbesondere Wurstmassen kann erheblich verringert werden.

In einer besonders bevorzugten Ausführungsform des Verfahrens wird in Schritt c) in Abhängigkeit vom gemessenen Druck der pastösen Masse auf die Fördertätigkeit der Fördermittel und/oder die Schneidetätigkeit der Schneidvorrichtung eingewirkt, um den Druck der pastösen Masse zwischen einem vorgewählten Höchstwert und einem vorgewählten Mindestwert einzustellen. Dieses Verfahren ermöglicht es, insbesondere kleinere Druckabweichungen vom Solldruck zu vernachlässigen, um eine gleichmäßigere Tätigkeit der Fördermittel und/oder der Schneidvorrichtung zu erzielen. Dadurch kann die pastöse Masse schonend gefördert und gewolft oder anderweitig in der Schneidvorrichtung verarbeitet werden, wodurch eine gleichbleibende, standardisierbare Produktqualität erreicht werden kann. Das Verfahren ist zudem besonders gut automatisierbar und weitestgehend unabhängig von Bedienpersonal durchzuführen. Ein zeit- und personlaufwendiges Überwachen der Massenförderung und -bearbeitung kann daher deutlich eingeschränkt werden. Der Höchstwert und der Mindestwert sind vorzugsweise nicht identisch, jedoch können der Höchstwert und/oder der Mindestwert gleich dem Solldruck sein.

Insbesondere ist es bevorzugt, wenn in Schritt c) in Abhängigkeit vom gemessenen Druck der pastösen Masse auf die Fördertätigkeit der Fördermittel und/oder die Schneidetätigkeit der Schneidvorrichtung eingewirkt wird, wenn der gemessene Druck der pastösen Masse ein jeweils vorgewähltes Zeitintervall lang vom vorgewählten Solldruck abweicht. Bei diesem Verfahren wird eine Änderung der Fördertätigkeit der Fördermittel und/oder der Schneidetätigkeit der Schneidvorrichtung erst dann herbeigeführt, wenn die Abweichung zwischen dem gemessenen Druck der pastösen Masse und dem vorgewählten Solldruck eine bestimmte Zeit lang besteht, wobei der Solldruck identisch sein kann mit dem Höchst- und/oder Mindestwert und Höchst- und Mindestwert voneinander verschieden sein können. Dieses Verfahren ermöglicht es ebenfalls, kurzzeitige Druckschwankungen zu ignorieren, um eine gleichmäßige Tätigkeit der Fördermittel und/oder der Schneidvorrichtung zu erreichen. Insbesondere ist es möglich, unterschiedlich lange Zeitintervalle für den Beginn des Einwirkens auf die Tätigkeit der Fördermittel und den Beginn des Einwirkens auf die Schneidetätigkeit der Schneidvorrichtung vorzusehen.

Die Aufgabe wird gemäß einem weiteren Aspekt gelöst durch ein Verfahren zum Fördern und Bearbeiten von pastöser Masse, umfassend die Schritte:
d) Fördern von pastöser Masse mit Fördermitteln von einem Vorratsraum zu einer Schneidvorrichtung zum Schneiden von pastöser Masse, wobei die Schneidvorrichtung einen mit einem Verschlussmittel mit einstellbarer Verschlusszeit verschließbaren Auslass umfasst, und
e) Messen des Drucks der pastösen Masse in Förderrichtung vor dem Auslass der Schneidvorrichtung,
f) Vergleichen des gemessenen Drucks der pastösen Masse mit einem vorgewählten Solldruck und in Abhängigkeit von der Abweichung zwischen dem gemessenen Druck der pastösen Masse und dem Solldruck Wählen der Verschlusszeit des Auslasses der Schneidvorrichtung, um den Druck der pastösen Masse auf den Solldruck einzustellen.

Gemäß diesem Aspekt der Erfindung wird der Druck der pastösen Masse durch zeitweiliges Öffnen und Verschließen eines Auslasses beeinflusst. Der Auslass kann insbesondere dazu eingerichtet sein, unerwünschte Massen-Bestandteile abzuführen. Zweckmäßigerweise ist der Auslass mit einem Trennventil als Verschlussmittel versehen. Das Trennventil verschließt den Auslass eine wählbare Verschlusszeit lang und öffnet ihn anschließend wieder. Steigt der Druck der pastösen Masse vor der Schneidvorrichtung über den vorgewählten Solldruck an, so wird - die Verschlusszeit verringert. Dadurch kann die Geschwindigkeit von aus der Schneidvorrichtung abfließenden Massen-Bestandteilen erhöht und somit der Druck der pastösen Masse vor der Schneidvorrichtung verringert werden. Unterschreitet der Druck der pastösen Masse vor der Schneidvorrichtung dagegen den vorgewählten Solldruck, so wird die Verschlusszeit verlängert. In Folge dessen verringert sich die Ausströmgeschwindigkeit der durch den Auslass abfließenden Massen-Bestandteile, so dass bei gleichbleibender Fördergeschwindigkeit der Fördermittel der Druck der pastösen Masse vor der Schneidvorrichtung ansteigt. Auch dieses Regelungsverfahren ist sehr einfach apparativ umzusetzen und ermöglicht es, eine sehr hohe Qualität der bearbeiteten pastöse Masse, insbesondere Wurstmasse, zu erzielen. Insbesondere wird es möglich, während der Bearbeitung der pastösen Masse unerwünschte Massen-Bestandteile abzutrennen und durch den Auslass abzuführen.

Besonders bevorzugt ist wiederum ein Verfahren, bei dem in Schritt f) in Abhängigkeit vom gemessenen Druck der pastösen Masse die Verschlusszeit eingestellt wird, um den Druck der pastösen Masse zwischen einem vorgewählten Höchstwert und einem vorgewählten Mindestwert einzustellen. Höchst- und Mindestwert können wiederum gleich dem Solldruck sein, in bevorzugten Ausführungsformen sind Höchst- und Mindestwert voneinander verschieden, wobei einer von beiden Drücken auch dem Solldruck gleich sein kann. Dies ermöglicht es, kurzzeitige Druckschwankungen zu ignorieren und ein gleichmäßiges Bearbeiten der pastösen Masse zu erreichen.

Ferner ist es bevorzugt, dass in Schritt f) in Abhängigkeit von gemessenem Druck der pastösen Masse die Verschlusszeit verändert wird, wenn der gemessene Druck der pastösen Masse ein vorgewähltes Zeitintervall lang vom vorgewählten Solldruck abweicht. Auch bei dieser Verfahrensausgestaltung können zugunsten einer gleichmäßigen Förderung und Bearbeitung von pastöser Masse kurzzeitige Druckschwankungen ignoriert werden.

Besonders bevorzugt sind wiederum Verfahren, mit denen mehrere oder alle der oben beschriebenen Ausführungsformen verwirklicht werden können. Diese Verfahren ermöglichen es, die mit den einzelnen Verfahren erzielbaren Vorteile gemeinsam zu nutzen.

Insbesondere ist es bevorzugt, wenn die Fördermittel und/oder die Schneidvorrichtung gestoppt werden, wenn der gemessene Druck der pastösen Masse einen Maximaldruck überschreitet oder einen Minimaldruck unterschreitet. Im ersten Fall wird einer Beschädigung der Vorrichtung, insbesondere der Fördermittel und der Schneidvorrichtung, durch übermäßige Druckbelastung vorgebeugt. Im zweiten Fall wird insbesondere ein Trockenlaufen der Fördermittel und/oder der Schneidvorrichtung verhindert. Zu einem Trockenlaufen kommt es, wenn kein zu verarbeitendes Material zur Verfügung steht, die Fördermittel bzw. die Schneidvorrichtung aber dennoch in Betrieb bleiben. In diesem Fall sinkt der Fülldruck auf etwa 0 bis 0,5 bar ab. Das Verfahren gestattet in beiden Fällen das automatische Abschalten einer entsprechenden Anlage und entlastet so das Bedienpersonal.

Gemäß dem Vorrichtungsaspekt wird die Aufgabe zum einen gelöst durch eine Vorrichtung zum Fördern und Bearbeiten von pastöser Masse, umfassend
- ein Förderwerk zum Fördern der pastösen Masse,
- eine dem Förderwerk in Förderrichtung nachgeordnete Schneidvorrichtung mit einer Ausgangsöffnung und
- einen zwischen dem Förderwerk und der Ausgangsöffnung der Schneidvorrichtung angeordneten Drucksensor zum Messen des Drucks der pastösen Masse,
wobei die Vorrichtung ferner eine Steuereinrichtung umfasst, die mit dem Drucksensor und dem Förderwerk und/oder der Schneidvorrichtung zusammenwirkt, um den Druck der pastösen Masse auf einen vorgewählten Solldruck einzustellen. Eine solche Vorrichtung ist besonders gut an das eingangs beschriebene erfindungsgemäße Verfahren angepasst.

Dementsprechend ist es besonders bevorzugt, wenn die Steuereinrichtung dazu eingerichtet ist, in Abhängigkeit vom gemessenen Druck der pastösen Masse auf die Fördertätigkeit der Fördermittel und/oder die Schneidetätigkeit der Schneidvorrichtung einzuwirken, um den Druck der pastösen Masse zwischen einem vorgewählten Höchstwert und einem vorgewählten Mindestwert einzustellen. Die Vorteile dieser Ausführungsform ergeben sich wiederum anhand des zuvor beschriebenen entsprechenden Verfahrens. Bei der erfindungsgemäßen Vorrichtung wird daher die Fördertätigkeit des Förderwerks verlangsamt, wenn der gemessene Druck den vorgewählten Höchstwert überschreitet, und die Fördertätigkeit beschleunigt, wenn der gemessene Druck den vorgewählten Mindestwert unterschreitet. Ergänzend oder alternativ dazu wird die Schneidtätigkeit der Schneidvorrichtung beschleunigt, wenn der gemessene Druck den vorgewählten Höchstwert überschreitet, und verlangsamt, wenn der gemessene Druck den vorgewählten Mindestwert unterschreitet. Wie schon zuvor für das entsprechende erfindungsgemäße Verfahren beschrieben, können auch hier der Höchst- und/oder Mindestwert gleich dem Solldruck sein.

Ferner ist es bevorzugt, wenn die Steuereinrichtung auf die Fördertätigkeit der Fördermittel und/oder die Schneidtätigkeit der Schneidvorrichtung einwirkt, wenn der gemessene Druck der pastösen Masse ein jeweils vorgewähltes Zeitintervall lang vom vorgewählten Solldruck abweicht. Das Zeitintervall kann dabei je nach zu beeinflussendem Vorrichtungselement (Fördermittel bzw. Schneidvorrichtung) sowie Art der Beeinflussung der Fördermittel einzeln definiert werden. Beispielsweise kann das Zeitintervall, das bis zu einem Beschleunigen der Tätigkeit der Fördermittel verstreichen muss, länger oder kürzer sein als das Zeitintervall, das zu einem Verlangsamen der Fördertätigkeit der Fördermittel verstreichen muss. Entsprechendes gilt für die Zeitintervalle, die für eine Änderung der Tätigkeit der Schneidvorrichtung verstreichen müssen. Auch diese Vorrichtung verwirklicht auf einfache Weise die mit der Durchführung des entsprechenden eingangs beschriebenen Verfahrens verbundenen Vorteile. Der Solldruck kann wiederum identisch sein mit dem Höchstwert und/oder dem Mindestwert.

Daneben ist eine Vorrichtung zum Fördern und Bearbeiten von pastöser Masse bevorzugt, die
- ein Förderwerk zum Fördern von pastöser Masse,
- eine dem Förderwerk in Förderrichtung nachgeordnete Schneidvorrichtung mit einer Ausgangsöffnung, und
- einen zwischen dem Förderwerk und der Ausgangsöffnung der Schneidvorrichtung angeordneten Drucksensor zum Messen des Drucks der pastösen Masse
   umfasst, wobei
- die Schneidvorrichtung einen Auslass und ein an diesem Auslass angeordnetes Verschlussmittel mit einstellbarer Verschlusszeit zum Verschließen des Auslasses und
- die Vorrichtung ferner eine Steuereinrichtung besitzt, die mit dem Drucksensor und dem steuerbaren Verschlussmittel zusammenwirkt, um den Druck der pastösen Masse auf einen vorgewählten Solldruck einzustellen.

Zweckmäßigerweise dient ein Trennventil mit einstellbarer Verschlusszeit als steuerbares Verschlussmittel. Auch diese Vorrichtung ist an das oben zuvor beschriebene erfindungsgemäße Verfahren besonders angepasst und ermöglicht es, die mit dem Verfahren verbundenen Vorteile auf einfache Weise zu realisieren.

In besonders bevorzugten Ausführungsformen ist der Auslass der Schneidvorrichtung in Förderrichtung nachgeordnet.

Es ist entsprechend besonders bevorzugt, wenn die Steuereinrichtung dazu eingerichtet ist, um die Verschlusszeit zu verkürzen, wenn der gemessene Druck einen vorgewählten Höchstwert überschreitet, und die Verschlusszeit zu verlängern, wenn der gemessene Druck einen vorgewählten Mindestwert unterschreitet. Auch diese Ausführungsform der erfindungsgemäßen Vorrichtung ist in vorteilhafter Weise an das zuvor beschriebene erfindungsgemäße Verfahren angepasst.

Um kurzzeitige Druckschwankungen ignorieren zu können, ist es ferner bevorzugt, wenn die Steuereinrichtung dazu eingerichtet ist, in Abhängigkeit vom gemessenen Druck die Verschlusszeit einzustellen, wenn der gemessene Druck der pastösen Masse den vorgewählten Solldruck ein vorgewähltes Zeitintervall lang überschreitet.

Besonders bevorzugt ist schließlich eine Vorrichtung zum Fördern und Bearbeiten von pastöser Masse, die mehrere Merkmale der zuvor beschriebenen erfindungsgemäßen Ausführungsformen in sich vereinigt. Bei einer solchen Vorrichtung kann das Einwirken der Steuereinrichtung auf das Verschlussmittel, d.h. das Einstellen der Verschlusszeit, das Förderwerk und/oder die Schneidvorrichtung jeweils davon abhängig gemacht werden, dass der gemessene Druck einen vorgewählten Höchstwert überschreitet, einen vorgewählten Mindestwert unterschreitet und/oder die Abweichung zwischen dem Solldruck und dem gemessenen Druck ein vorgewähltes Zeitintervall lang andauert.

In einer besonders vorteilhaften erfindungsgemäßen Vorrichtung sind Steuermittel zum Steuern der Fördermittel und der Schneidvorrichtung vorgesehen, um diese zu stoppen, wenn der vom Drucksensor gemessene Druck der pastösen Masse einen Maximaldruck überschreitet oder einen Minimaldruck unterschreitet. Dabei ist es besonders bevorzugt, wenn die Steuermittel eingerichtet sind, beim Starten der Vorrichtung die Betriebsgeschwindigkeit der Fördermittel und/oder der Schneidvorrichtung auf vorzugsweise weniger als 20 % der maximalen Betriebsgeschwindigkeit zu begrenzen, solange der vom Drucksensor gemessene Druck der pastösen Masse einen Minimaldruck von vorzugsweise 0,5 bar unterschreitet. Bei einem solchen minimalen Fülldruck befindet sich keine oder nur wenig pastöse Masse im Bereich der Fördermittel bzw. in der Scheidvorrichtung. Die Fördertätigkeit der Fördermittel und/oder die Schneidetätigkeit der Schneidemittel wird deshalb erfindungsgemäß begrenzt, um Beschädigungen an den Fördermitteln und/oder der Schneidvorrichtung zu vermeiden. Sobald die Fördermittel ausreichend pastöse Masse zur Schneidvorrichtung gefördert haben, wird der Minimaldruck überschritten und die Begrenzung der Betriebsgeschwindigkeit der Fördermittel und/oder der Schneidvorrichtung wird von den Steuermitteln aufgehoben, so dass die Vorrichtung mit der gewöhnlichen Betriebsgeschwindigkeit betrieben werden kann.

Ferner sind solche Vorrichtungen zum Fördern und Bearbeiten von pastöser Masse bevorzugt, deren Schneidvorrichtung eine Drehachse und einen von der Drehachse ausgehenden Auslass besitzen. Beim erfindungsgemäßen Betrieb der Vorrichtung sammeln sich unerwünschte Massen-Bestandteile wie beispielsweise Sehnen, Knorpel, Knochensplitter und dergleichen an der Drehachse der Schneidvorrichtung und können von dort durch den Auslass abgeführt werden. Der Auslass kann insbesondere auch mit einem Verschlussmittel mit einstellbarer Verschlusszeit wie oben beschrieben ausgerüstet sein.

Vorzugsweise ist der Auslass mit einem Fördermittel zum Abführen unerwünschter Massen-Bestandteile versehen. Dabei handelt es sich zweckmäßigerweise um eine Förderschnecke. Die Fördermittel unterstützen das Abführen unerwünschter Massen-Bestandteile. Sie können daher das rasche Einstellen des Drucks der pastösen Masse vor der Schneidvorrichtung unterstützen und die Produktqualität dadurch weiter verbessern.

Besonders bevorzugt ist es zudem, wenn der Drucksensor in einer Buchse angeordnet ist. Durch die Buchse können mechanische Beschädigungen des Sensors verhindert und sein Verschleiß verlangsamt werden. Dabei ist es bevorzugt, wenn der Sensor in der Buchse mit einer Mutter, insbesondere einer Überwurfmutter, befestigt ist. Durch diese Befestigungsweise wird der Sensor sicher in der Buchse befestigt, zudem ist die rasche Demontage und Reinigung des Sensors vorteilhaft vereinfacht.

In einer weiteren bevorzugten Ausführungsform umfasst die Vorrichtung ferner Anzeigemittel zum Anzeigen des vom Drucksensor gemessenen Drucks. Dies ermöglicht es einem Bediener, eine Verschlechterung der Schneidwirkung der Schneidvorrichtung zu erkennen. Eine Reinigung der Elemente der Schneidvorrichtung und gegebenenfalls ein Nachschleifen kann somit je nach Bedarf der jeweiligen Schneidvorrichtung erfolgen und muss nicht in zeitlich festgelegten Abständen vorgenommen werden. Hierdurch werden die Betriebskosten der erfindungsgemäßen Vorrichtung gesenkt.

Die Erfindung wird anhand der nachfolgenden Figuren und Ausführungsbeispiele näher beschrieben. Es stellen dar:
- Fig. 1: eine schematische Darstellung der erfindungsgemäßen Vorrichtung in einer Aufsicht;
- Fig.2: eine weitere schematische Aufsicht auf die erfindungsgemäße Vorrichtung gemäß Fig. 1;
- Fig. 3a: eine schematische Seitenansicht einer weiteren erfindungsgemäßen Vorrichtung im Querschnitt;
- Fig. 3b: eine schematische Darstellung der erfindungsgemäßen Vorrichtung aus Fig. 3a in der Aufsicht; und
- Fig. 4: eine schematische Aufsicht auf eine weitere erfindungsgemäße Vorrichtung.

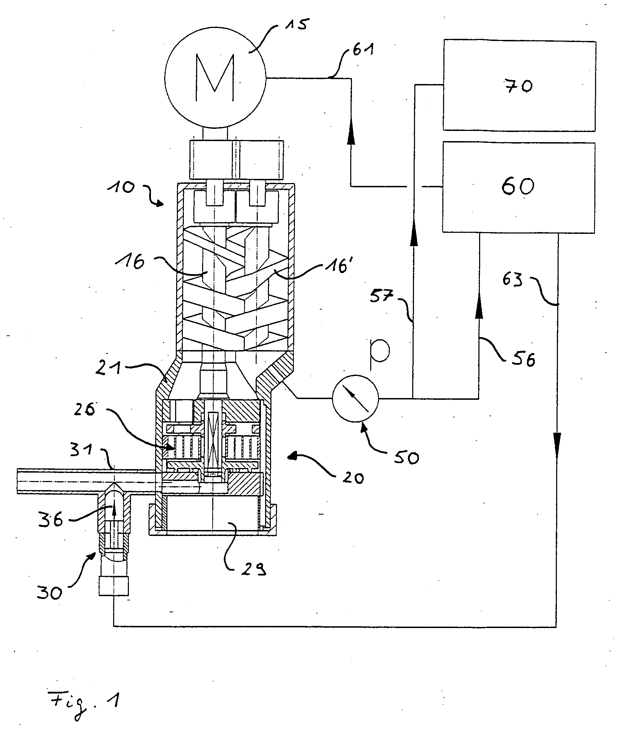

In Fig. 1 und den weiteren Figuren ist jeweils eine Vorrichtung zum Fördern und Bearbeiten von pastösen Massen dargestellt. Die Vorrichtungen sind besonders an das Fördern und Bearbeiten von Wurstmasse angepasst.

Die in Fig. 1 dargestellte Vorrichtung besitzt ein Doppelschnecken-Förderwerk 10 mit zwei Förderschnecken 16, 16', einen Förderwerks-Ausgang und einen die Förderschnecken antreibenden Motor 15. In Förderrichtung hinter dem Förderwerk 10 ist eine Schneidvorrichtung, nämlich ein Fleischwolf 20 angeordnet, dessen Gehäuse 21 einen Verbindungsraum zum Förderwerk 10 an dessen Ausgang bildet. Im Inneren des Fleischwolfs 20 sind Schneidmittel 26, nämlich Trennscheiben und Messer, um eine zentrale Drehachse herum angeordnet. In Förderrichtung hinter dem Fleischwolf 20 ist ein Auslass in Form eines Auslassrohres 31 zum Abtrennen unerwünschter Wurstmassen-Bestandteile wie Sehnen, Knorpel und Knochensplitter angeordnet. Das Auslassrohr 31 zweigt aus dem Fleischwolf 20 auf Höhe der zentralen Drehachse in Förderrichtung hinter den Schneidmitteln 26 ab. Das Auslassrohr 31 ist mit einem Trennventil 30 versehen. Das Trennventil 30 besitzt einen Verschlusskörper 36, mit dem das Auslassrohr 31 ein einstellbares Verschlusszeit-Intervall lang verschlossen werden kann. Neben dem Auslassrohr 31 besitzt der Fleischwolf 20 auch einen Fleischwolf-Ausgang 29 zur Abgabe gewolfter Wurstmasse.

In dem vom Gehäuse 21 gebildeten Verbindungsraum zwischen dem Förderwerk 10 und den Fleischwolf 20 ist ein Drucksensor 50 (schematisch dargestellt) angeordnet. Der Drucksensor 50 ist über eine Leitung 57 mit einer Anzeige 70 zum Anzeigen des vom Drucksensor 50 gemessenen Drucks verbunden. Über eine weitere Leitung 56 ist der Drucksensor 50 mit einer Steuereinrichtung 60 verbunden. Die Steuereinrichtung 60 ist sowohl mit dem Motor 15 des Förderwerks 10 über eine Steuerleitung 61 als auch mit dem Trennventil 30 über eine Steuerleitung 63 verbunden.

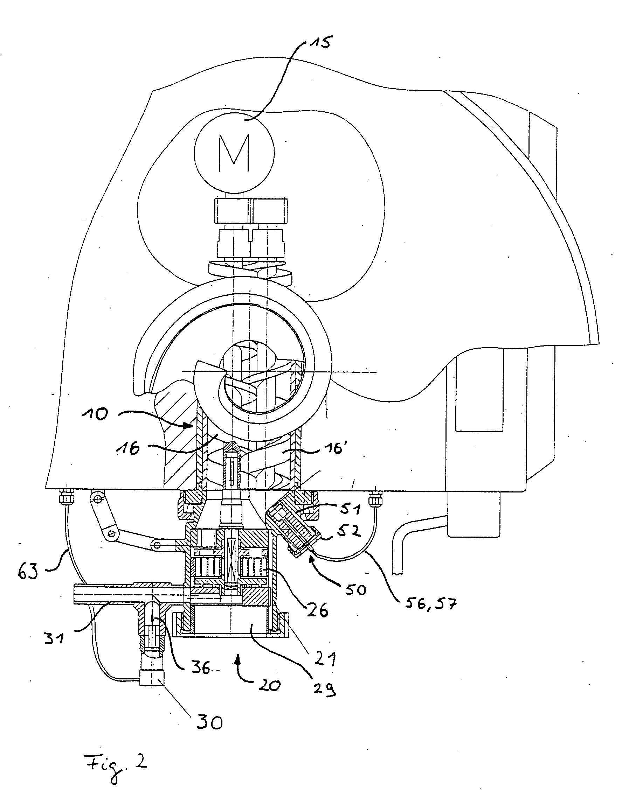

In Fig. 2 ist die Anordnung des Drucksensors 50 an der erfindungsgemäßen Vorrichtung genauer dargestellt. In der Wand des Gehäuses 21 des Fleischwolfs 20 ist zwischen den Schneidmitteln 26 und dem Förderwerk 10 eine Buchse 51 eingelassen. In der Buchse 51 ist ein Drucksensor 50 aufgenommen und durch eine Überwurfmutter 52 in der Buchse 50 gesichert. Durch die Überwurfmutter 52 sind die Leitungen 56, 57 hindurch zur Steuereinrichtung 60 (nicht dargestellt) und zur Anzeige 70 (nicht dargestellt) geführt.

Das Förderwerk 10 ist mit einem in Fig. 2 angedeuteten Vorratstrichter zur Aufnahme von Wurstmasse wie Fleisch und weiteren Zutaten zur Wurstherstellung ausgestattet. Im Inneren des Trichters ist ein Schneckenförderer zum Transport der Wurstmasse zu den Förderschnecken 16, 16' des Förderwerks 10 angeordnet.

Im Betrieb der erfindungsgemäßen Vorrichtung wird zunächst Wurstmasse in den Vorratstrichter eingefüllt. Durch den im Inneren des Trichters angeordneten Schneckenförderer wird die Wurstmasse zu den Förderschnecken 16, 16' des Förderwerks 10 transportiert. Die Förderschnecken 16, 16' des Förderwerks 10 befördern die Wurstmasse, angetrieben durch den Motor 15, durch den Förderwerks-Ausgang aus dem Förderwerk 10 zum Fleischwolf 20. Dabei gelangt die geförderte Masse zunächst in den vom Gehäuse 21 des Fleischwolfs 20 gebildeten Verbindungsraum zwischen den Schneidmitteln 26 und dem Förderwerks-Ausgang 29. In diesem Verbindungsraum wird durch den Transport der Wurstmasse ein Innendruck aufgebaut. Die Wurstmasse wird mit den Schneidmitteln 26 des Fleischwolfes 20 zerkleinert. Dabei werden unerwünschte Wurstmassenbestandteile wie Sehnen, Knorpel und Knochensplitter in der Nähe der zentralen Drehachse des Fleischwolfs 20 angereichert. Beim Weiterbefördern der gewolften Wurstmasse werden die unerwünschten Wurstmassen-Bestandteile in das Auslassrohr 31 und von dort aus dem Fleischwolf 20 herausgepresst, während die erwünschten gewolften Wurstmassen-Bestandteile durch den Fleischwolf-Ausgang 29 austreten.

Zum Einstellen des Drucks der Wurstmasse vor den Schneidvorrichtungen 26 wird der vom Drucksensor 50 gemessene Druckwert über die Leitung 56 zur Steuereinrichtung 60 übermittelt. Die Steuereinrichtung 60 vergleicht die übermittelten Druckwerte mit einem zuvor eingestellten Höchstwert und einem ebenfalls zuvor eingestellten Mindestwert. Überschreitet der Druckwert über einen vorgewählten Zeitraum den Höchstwert, so gibt die Steuereinrichtung 60 über die Steuerleitung 61 ein Verlangsamungssignal an den Motor 15 des Förderwerks 10. Der Motor 15 verlangsamt daraufhin seine Tätigkeit, so dass die Fördergeschwindigkeit des Förderwerks 10 verringert wird. Über die Steuerleitung 63 leitet die Steuereinrichtung 60 ein Öffnungssignal an das Trennventil 30. Der Verschlusskörper 36 des Steuerventils 30 wird daraufhin aus dem Inneren des Auslassrohres 31 herausgezogen, um Austreten der unerwünschten Wurstmassen-Bestandteile zu ermöglichen. Durch das Verlangsamen der Fördertätigkeit des Förderwerks 10 und das Öffnen des Auslassrohres 31 kann mehr Wurstmasse die Vorrichtung verlassen, als aus dem Vorratstrichter nachgefördert wird, so dass der Druck der Wurstmasse vor der Schneidvorrichtung 20 sinkt.

Unterschreitet der Druckwert über einen vorgewählten Zeitraum den Mindestwert, so sendet die Steuereinrichtung 60 über die Steuerleitung 61 ein Beschleunigungssignal an den Motor 15. Dieser beschleunigt daraufhin seine Tätigkeit, so dass die Fördergeschwindigkeit des Förderwerks 10 zunimmt. Ferner sendet die Steuereinrichtung 60 über die Steuerleitung 63 ein Schließsignal an das Trennventil 30. Daraufhin wird der Verschlusskörper 36 des Trennventils 30 ins Innere des Auslassrohres 31 bewegt, um dieses zu verschließen. Die Beschleunigung des Motors 15 und das Verschließen des Auslassrohres 31 bewirken eine Erhöhung des Drucks der Wurstmasse am Drucksensor 50 vor den Schneidmitteln 26. Sobald der vom Drucksensor 50 bestimmte Druck der Wurstmasse den Mindestwert eine vorgewählte Zeit lang überschreitet, werden keine Beschleunigungs- bzw. Schließsignale mehr an den Motor 15 bzw. das Trennventil 30 von der Steuerleitung 60 gesendet. Der Druck der Wurstmasse vor den Schneidmitteln 26 liegt dann im gewünschten Bereich.

Das Einwirken auf die Fördertätigkeit des Förderwerks 10 und die Schneidetätigkeit des Fleischwolfs 20 kann je nach Programm der Steuereinrichtung 60 unabhängig voneinander erfolgen. Insbesondere ist es möglich, die Fördertätigkeit des Förderwerks 10 zu verändern, ohne die Schneidetätigkeit des Fleischwolfes 20 zu verändern, und umgekehrt.

Der vom Drucksensor 50 gemessene Druckwert wird zudem über die Leitung 57 an die Anzeige 70 zur Anzeige des gemessenen Drucks geleitet. Auf diese Weise kann der Betrieb der Vorrichtung vom Bedienpersonal überwacht werden.

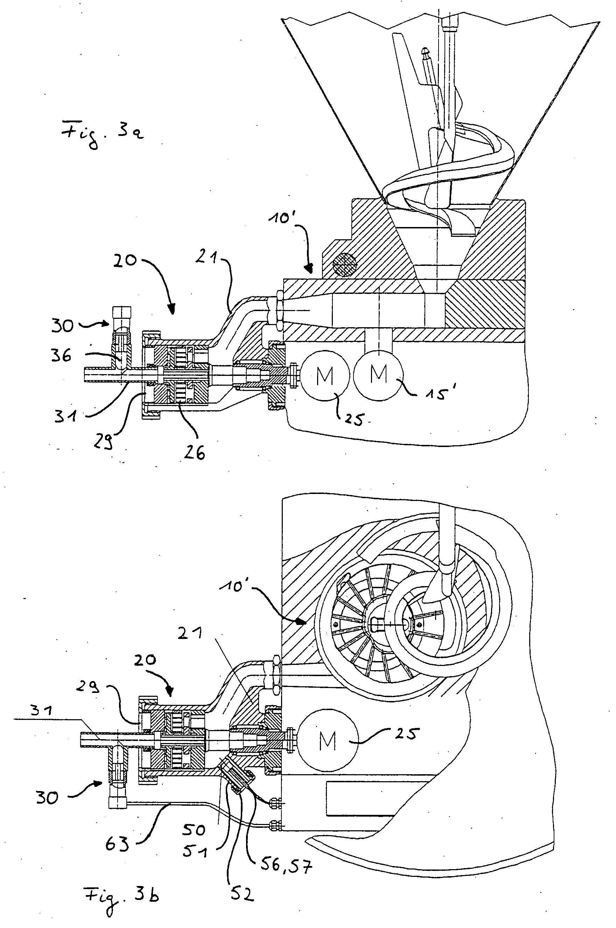

In den Fig. 3a und 3b ist eine weitere Ausführungsform der erfindungsgemäßen Vorrichtung dargestellt. Diese unterscheidet sich von der in den Fig. 1 und 2 dargestellten Ausführungsform lediglich darin, dass statt des Doppelschnecken-Förderwerks 10 eine Flügelzellenpumpe 10' mit einem Motor 15' vorgesehen ist. Die Betriebsweise der Vorrichtung nach Fig. 3a und 3b entspricht der der Vorrichtung nach Fig. 1 und 2, wobei die Steuereinrichtung 60 mit der Steuerleitung 61 auf den Motor 15' anstelle des Motors 15 bzw. auf den Motor 25 einwirkt.

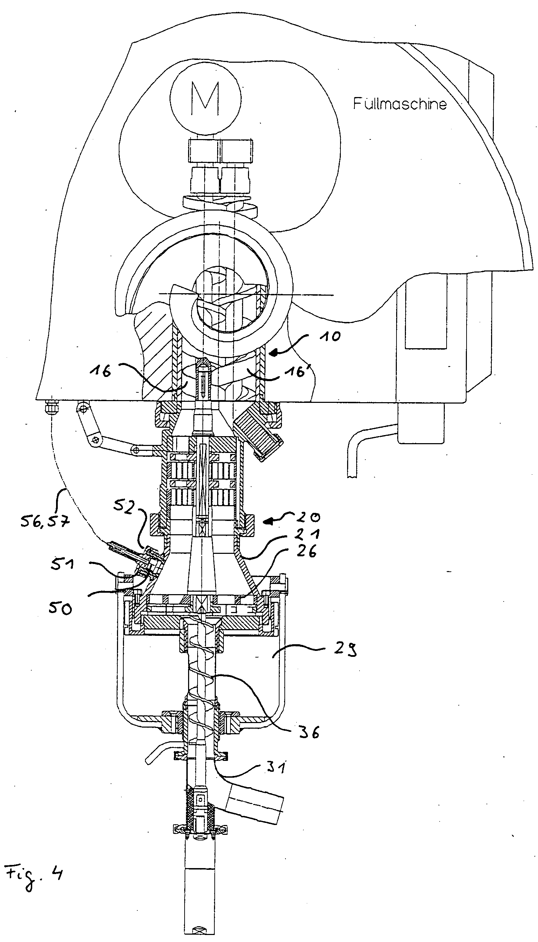

In Fig. 4 ist eine schematische Aufsicht auf eine weitere erfindungsgemäße Vorrichtung dargestellt. Im Gegensatz zu den in den Figuren 1 bis 3b dargestellten Ausführungsformen besitzt der Fleischwolf 20 mehrere Schneidvorrichtungs-Stufen. Der Drucksensor 50 ist dabei im Gehäuse 21 des Fleischwolfs 20 in einer Buchse zwischen den Schneidmitteln 26 der letzten Stufe und den Schneidmitteln der in Förderrichtung vorangegangenen Stufe angeordnet. Mit dem Drucksensor 50 wird der Druck der Wurstmasse vor den Schneidmitteln 26 der letzten Stufe gemessen.

Um die zentrale Drehachse der Schneidmitteln 26 des Fleischwolfs 20 ist ein Auslass in Form eines Auslassrohres 31 angeordnet. Das Auslassrohr 31 ist mit einem Fördermittel, nämlich einer Förderschnecke 34, ausgerüstet, um die in das Auslassrohr 31 gepressten unerwünschten Wurstmassen-Bestandteile abzuführen. Die erfindungsgemäße Vorrichtung gemäß Fig. 4 wird entsprechend den Vorrichtungen gemäß Figuren 1 bis 3b betrieben.

## Patentansprüche

1. Verfahren zum Fördern und Bearbeiten von pastöser Masse, umfassend die Schritte:
a) Fördern von pastöser Masse mit Fördermitteln von einem Vorratsraum zu einer Schneidvorrichtung mit einer Ausgangsöffnung und
b) Messen des Drucks der pastösen Masse in Förderrichtung vor der Ausgangsöffnung der Schneidvorrichtung,
**dadurch gekennzeichnet, dass**
c) der gemessene Druck der pastösen Masse mit einem vorgewählten Solldruck verglichen und in Abhängigkeit von der Abweichung zwischen dem gemessenen Druck der pastösen Masse und dem Solldruck auf die Fördertätigkeit der Fördermittel und/oder die Schneidetätigkeit der Schneidvorrichtung eingewirkt wird, um den Druck der pastösen Masse auf den Solldruck einzustellen.

2. Verfahren nach Anspruch 1, **dadurch gekennzeichnet, dass** in Schritt c) in Abhängigkeit vom gemessenen Druck der pastösen Masse auf die Fördertätigkeit der Fördermittel und/oder die Schneidetätigkeit der Schneidvorrichtung eingewirkt wird, um den Druck der pastösen Masse zwischen einem vorgewählten Höchstwert und einem vorgewählten Mindestwert einzustellen.

3. Verfahren nach einem der vorherigen Ansprüche, **dadurch gekennzeichnet, dass** in Schritt c) in Abhängigkeit vom gemessenen Druck der pastösen Masse auf die Fördertätigkeit der Fördermittel und/oder die Schneidetätigkeit der Schneidvorrichtung eingewirkt wird, wenn der gemessene Druck der pastösen Masse ein jeweils vorgewähltes Zeitintervall lang vom vorgewählten Solldruck abweicht.

4. Verfahren zum Fördern und Bearbeiten von pastöser Masse, umfassend die Schritte:
d) Fördern von pastöser Masse mit Fördermitteln von einem Vorratsraum zu einer Schneidvorrichtung zum Schneiden von pastöser Masse, wobei die Schneidvorrichtung einen mit einem Verschlussmittel mit einstellbarer Verschlusszeit verschließbaren Auslass umfasst, und
e) Messen des Drucks der pastösen Masse in Förderrichtung vor dem Auslass der Schneidvorrichtung,
f) Vergleichen des gemessenen Drucks der pastösen Masse mit einem vorgewählten Solldruck und in Abhängigkeit von der Abweichung zwischen dem gemessenen Druck der pastösen Masse und dem Solldruck Wählen der Verschlusszeit, um den Druck der pastösen Masse auf den Solldruck einzustellen.

5. Verfahren nach Anspruch 4, **dadurch gekennzeichnet, dass** in Schritt f) in Abhängigkeit vom gemessenen Druck der pastösen Masse die Verschlusszeit eingestellt wird, um den Druck der pastösen Masse zwischen einem vorgewählten Höchstwert und einem vorgewählten Mindestwert einzustellen.

6. Verfahren nach einem der Ansprüche 4 bis 5, **dadurch gekennzeichnet, dass** in Schritt f) in Abhängigkeit von gemessenem Druck der pastösen Masse die Verschlusszeit verändert wird, wenn der gemessene Druck der pastösen Masse ein vorgewähltes Zeitintervall lang vom vorgewählten Solldruck abweicht.

7. Verfahren nach einem der Ansprüche 1 bis 3, **dadurch gekennzeichnet, dass** das Verfahren auch ein Verfahren nach einem der Ansprüche 4 bis 6 ist.

8. Verfahren nach einem der vorherigen Ansprüche, **dadurch gekennzeichnet, dass** die Fördermittel und/oder die Schneidvorrichtung gestoppt werden, wenn der gemessene Druck der pastösen Masse einen vorgewählten Maximaldruck überschreitet oder einen Minimaldruck unterschreitet.

9. Vorrichtung zum Fördern und Bearbeiten von pastöser Masse, umfassend
- ein Förderwerk zum Fördern der pastösen Masse,
- eine dem Förderwerk in Förderrichtung nachgeordnete Schneidvorrichtung mit einer Ausgangsöffnung und
- einen zwischen dem Förderwerk und der Ausgangsöffnung der Schneidvorrichtung angeordneten Drucksensor zum Messen des Drucks der pastösen Masse,
**dadurch gekennzeichnet, dass** die Vorrichtung ferner eine Steuereinrichtung umfasst, die mit dem Drucksensor und dem Förderwerk und/oder der Schneidvorrichtung zusammenwirkt, um den Druck der pastösen Masse auf einen vorgewählten Solldruck einzustellen.

10. Vorrichtung nach Anspruch 9, **dadurch gekennzeichnet, dass** die Steuereinrichtung dazu eingerichtet ist, in Abhängigkeit vom gemessenen Druck der pastösen Masse auf die Fördertätigkeit der Fördermittel und/oder die Schneidetätigkeit der Schneidvorrichtung einzuwirken, um den Druck der pastösen Masse zwischen einem vorgewählten Höchstwert und einem vorgewählten Mindestwert einzustellen.

11. Vorrichtung nach einem der Ansprüche 9 bis 10, **dadurch gekennzeichnet, dass** die Steuereinrichtung dazu eingerichtet ist, auf die Fördertätigkeit der Fördermittel und/oder die Schneidtätigkeit der Schneidvorrichtung einzuwirken, wenn der gemessene Druck der pastösen Masse ein jeweils vorgewähltes Zeitintervall lang vom vorgewählten Solldruck abweicht.

12. Vorrichtung zum Fördern und Bearbeiten von pastöser Masse, umfassend
- ein Förderwerk zum Fördern von pastöser Masse,
- eine dem Förderwerk in Förderrichtung nachgeordnete Schneidvorrichtung mit einer Ausgangsöffnung, und
- einen zwischen dem Förderwerk und der Ausgangsöffnung der Schneidvorrichtung angeordneten Drucksensor zum Messen des Drucks der pastösen Masse vor der Schneidvorrichtung,
**dadurch gekennzeichnet, dass**
- die Schneidvorrichtung einen Auslass und ein an diesem Auslass angeordnetes Verschlussmittel mit einstellbarer Verschlusszeit zum Verschließen des Auslasses und
- die Vorrichtung ferner eine Steuereinrichtung besitzt, die mit dem Drucksensor und dem steuerbaren Verschlussmittel zusammenwirkt, um den Druck der pastösen Masse auf einen vorgewählten Solldruck einzustellen.

13. Vorrichtung nach Anspruch 12, **dadurch gekennzeichnet, dass** die Steuereinrichtung dazu eingerichtet ist die Verschlusszeit des Verschlussmittels zu verkürzen, wenn der gemessene Druck einen vorgewählten Höchstwert überschreitet, und die Verschlusszeit des Verschlussmittels zu verlängern, wenn der gemessene Druck einen vorgewählten Mindestwert unterschreitet.

14. Vorrichtung nach einem der Ansprüche 12 bis 13, **dadurch gekennzeichnet, dass** die Steuereinrichtung dazu eingerichtet ist, in Abhängigkeit vom gemessenen Druck die Verschlusszeit einzustellen, wenn der gemessene Druck der pastösen Masse den vorgewählten Solldruck ein vorgewähltes Zeitintervall lang überschreitet.

15. Vorrichtung nach einem der Ansprüche 9 bis 11, **dadurch gekennzeichnet, dass** die Vorrichtung auch eine Vorrichtung nach einem der Ansprüche 12 bis 14 ist.

16. Vorrichtung nach einem der Ansprüche 9 bis 15, **dadurch gekennzeichnet, dass** die Vorrichtung Steuermittel umfasst, um die Fördermittel und/oder die Schneidvorrichtung zu stoppen, wenn der vom Drucksensor gemessene Druck der pastösen Masse einen Maximaldruck überschreitet oder einen Minimaldruck unterschreitet.

17. Vorrichtung nach einem der Ansprüche 9 bis 16, **dadurch gekennzeichnet**, das die Schneidvorrichtung eine Drehachse und einen von der Drehachse ausgehenden Auslass besitzt.

18. Vorrichtung nach Anspruch 17, **dadurch gekennzeichnet, dass** der Auslass ein Fördermittel zum Abführen unerwünschter Massen-Bestandteile besitzt.

19. Vorrichtung nach Anspruch 18, **dadurch gekennzeichnet, dass** das Fördermittel eine Förderschnecke ist.

20. Vorrichtung nach einem der Ansprüche 9 bis 19, **dadurch gekennzeichnet, dass** der Drucksensor in einer Buchse angeordnet ist.

21. Vorrichtung nach einem der Ansprüche 9 bis 20, **dadurch gekennzeichnet, dass** die Vorrichtung Anzeigemittel zum Anzeigen des vom Drucksensor gemessenen Drucks umfasst.
